# EUROPÄISCHE PATENTSCHRIFT

(11) **EP 1 136 738 B1**
(45) Veröffentlichungstag und Bekanntmachung des Hinweises auf die Patenterteilung: **19.05.2004**
(21) Anmeldenummer: 01105425.1
(22) Anmeldetag: 13.03.2001
(51) Int. Cl.: F16K 41/02, F16K 5/06, F16K 41/04

(54) **Abdichtsystem für die Schaltwelle einer Armatur**
Spindle sealing for a valve
Joint d'étanchéité pour tige de vanne

(30) Priorität: 22.03.2000 DE 20005319 U
(43) Veröffentlichungstag der Anmeldung: 26.09.2001
(73) Patentinhaber: JC Fàbrica de vàlvulas, s.a., 08830 Sant Boi de Llobregat (Barcelona) (ES)
(72) Erfinder: Claret, José, 08830 Sant Boi de Llobregat (Barcelona) (ES); Braig, Hans, 678720 Hoerdt (FR)
(74) Vertreter: Resch, Michael, Dipl.-Phys.

(56) Entgegenhaltungen:
- EP-A- 0 937 925
- WO-A-01/36854
- DE-A- 19 627 326
- FR-A- 1 344 415
- US-A- 4 169 604
- US-A- 4 489 916

## Beschreibung

Die Erfindung betrifft ein Abdichtsystem für die Schaltwelle einer Armatur, insbesondere eines Kugelhahns, mit einer zwischen der Schaltwelle und einer hierzu konzentrischen, der Schaltwelle gegenüberliegenden Wandung angeordneten Packung, die mittels einer koaxial zur Schaltwelle verstellbaren Stopfbuchsschraube zum Herstellen der Dichtung zwischen Schaltwelle und Wandung in radialer Richtung deformierbar ist.

Weiterhin betrifft die Erfindung einen Kugelhahn mit einem solchen Abdichtsystem sowie eine Packung für ein Abdichtsystem für die Schaltwelle einer Armatur, insbesondere eines Kugelhahns.

Die Schaltwelle bei Kugelhähnen dient zur Bewegungsübertragung zur abdichtenden Kugel von außen nach innen, wobei je nach Typ des Kugelhahns die Welle und die Kugel zwischen 90° und 180° gedreht werden. Die Betätigung erfolgt von Hand oder über ggf. automatisch gesteuerte Antriebe. In der Prozesstechnik der Chemie, dem bevorzugten Anwendungsgebiet der vorliegenden Erfindung, werden die meisten Armaturen motorisch, also automatisch betätigt.

Es sind verschiedenartige Abdichtsysteme für die Schaltwellen bekannt. Die Abdichtsysteme können z.B. aus O-Ringen aus Elastomerkompounds bestehen, wobei je nach Temperaturbelastung und Medium ein breites Angebot zur Verfügung steht, oder aus anderen komprimierbaren elastischen Werkstoffen hauptsächlich auf der Basis von PTFE.

Diese sogenannten Packungen sind verpresst oder bestehen aus gesinterten PTFE-Drehteilen (diverse PTFE-Kompounds), die im Kugelhahngehäuse mittels einer Kombination von Tellerfedern und Nachstellschrauben die Abdichtung der Schaltwelle nach außen durch ihre Pressverformung gewährleisten.

Die Schaltwellenabdichtung (auch Stopfbuchspackung genannt) wird ringförmig als vorgeformte PTFE-Gewebeschnur oder als profiliertes Drehteil zwischen das Kugelhahngehäuse und die Schaltwelle montiert, d.h. über die Schaltwelle gezogen. Bei der Verpressung verformt sich die Packung gegen das Gehäuse und die Schaltwelle, wodurch der gewünschte Abdichteffekt erreicht wird.

Der Verpressungsgrad in Verbindung mit der Elastizität des Dichtungsmaterials beeinflußt den Abdichteffekt an der Schaltwelle. Die Auswahl des Werkstoffs der Dichtung, die Geometrie und die Schaltwellenoberfläche bestimmen die Standzeit der Packung.

Andererseits tritt je nach Material und Grad der Verpressung an der Schaltwelle ein mehr oder weniger großer Bremseffekt auf, wodurch das Drehmoment der Armatur erhöht wird, d.h. der Kraftaufwand zum Schalten der Armatur steigt an, was wiederum möglichst vermieden werden sollte.

In der Praxis richtet sich die Auslegung der Armaturenantriebe nach dem individuellen Drehmoment der Armatur, d.h. bei hohem Drehmoment ist ein großer, teurer Antrieb vonnöten. Aus diesem Grund sind die Hersteller von Armaturen stets bestrebt, das Drehmoment der Armatur konstruktiv zu reduzieren, was dann allerdings oftmals auf Kosten von Dichtheit und Standzeit gehen kann. Darüber hinaus ist der Grad der Dichtheit von Armaturen nach außen durch diverse Umweltschutzbestimmungen festgelegt (z.B. TA-Luft), und zwar insbesondere auch auf dem bevorzugten Einsatzgebiet der vorliegenden Erfindung, nämlich bei Kugelhähnen, die schwerpunktmäßig in Bereichen der Chemie und artverwandten Industrien eingesetzt werden, wo sehr hohe Anforderungen an Armaturen in Bezug auf Dichtheit nach außen vorgegeben werden.

Aus der US-A-4 489 916 ist ein Abdichtsystem für eine Schalt welle bekannt, wobei die Packung einen ersten Bereich umfaßt, der im Wesentlichen an der Schaltwelle anliegt und aus einem ersten Material besteht, die Pakkung einen zweiten Bereich umfaßt, der im Wesentlichen an der der Schaltwelle gegenüberliegenden Wandung anliegt und aus einem zweiten, vom ersten Material unterschiedlichen Material besteht, das erste Material gleitfähiger ist als das zweite Material, das zweite Material fließfähiger ist als das erste Material und die Packung mehrstückig als Keilringdichtung mit mindestens zwei Keilringen ausgebildet ist, wobei der mindestens eine, im Wesentlichen an der Schaltwelle anliegende erste Keilring aus dem ersten Material und der mindestens eine, im Wesentlichen an der gegenüberliegenden Wandung anliegende zweite Keilring aus dem zweiten Material besteht. Hierdurch wird auch bei hoher Schalthäufigkeit über lange Zeiträume eine gute Dichtheit an der Packung erreicht, und das bei einem vergleichsweise geringen Drehmoment der Armatur.

Es wird also die Packung in eine dynamische Dichtseite zur Schaltwelle hin und in eine statische Dichtseite zur Gehäusewandung hin unterteilt. Es kommen hierbei zwei verschiedene Werkstoffe zum Einsatz, wobei jeder Werkstoff für den jeweiligen Zweck optimal ausgewählt werden kann; für die dynamische Seite wird ein vergleichsweise gleitfähiges Material und für die statische Seite ein vergleichsweise fließfähiges Material gewählt.

Der Erfindung liegt die Aufgabe zugrunde, eine auch bei Verschleiß besonders sichere Dichtung zu schaffen.

Diese Aufgabe wird erfindungsgemäß dadurch gelöst, daß sich an die Keilfläche des zweiten Keilrings an ihrem schaltwellennahen Ende eine Umlenkfläche mit größerer Neigung als diejenige der Keilfläche anschließt, wobei sich die Umlenkfläche bis zur Schaltwelle hin erstreckt. Der entsprechend zugeordnete erste Keilring weist in diesem Fall in bevorzugter Weiterbildung der Erfindung an seinem schmalen Ende eine der Neigung der Umlenkfläche entsprechende Endfläche auf. Auf diese Weise wird eine sogenannte Notabdichtung geschaffen. Wenn durch einsatzbedingten Verschleiß der erste Keilring am Ende des zweiten Keilrings anliegt und mit seiner Endfläche auf die Umlenkfläche aufläuft, so bewirkt ein Nachstellen der Packungsschraube, daß das vordere Ende des ersten Keilrings gegen die Schaltwelle gedrückt wird und sich verformt und so eine zusätzliche Dichtfunktion bewirkt.

In bevorzugter Weiterbildung der Erfindung ist das erste Material ein gleitfähiges PTFE-Kompound und das zweite Material reines fließfähiges PTFE.

Die Packung kann jeweils einen ersten und einen zweiten Keilring aufweisen. Eine besonders zuverlässige Dichtung wird jedoch erzielt, wenn in bevorzugter Weiterbildung der Erfindung das Abdichtsystem zwei erste Keilringe und einen zweiten Keilring umfaßt, wobei der zweite Keilring zwei dachförmig entgegengesetzt geneigte Keilflächen aufweist, denen jeweils eine Keilfläche der beiden ersten Keilringe gegenüberliegt.

Gemäß einem weiteren vorteilhaften Merkmal der Erfindung ist vorgesehen, daß der an der Schaltfläche anliegende erste Bereich der Packung und/oder der an der gegenüberliegenden Seite anliegende zweite Bereich der Packung Vertiefungen aufweist, die zweckmäßigerweise als Rillen ausgebildet sein können, wobei die jeweiligen Kontaktflächen zweckmäßigerweise im wesentlichen lamellenförmig ausgebildet sein können. Aufgrund der zahnartigen Auflage der Packung an der Schaltwelle bzw. an der Gehäusewandung wird ein Labyrintheffekt erzielt. Weiterhin ergibt sich eine höhere Flächenpressung an den Auflagestellen. An der statischen Seite wird dadurch ein besseres Fließen des Materials erreicht. An der dynamischen Seite wird der Vorteil erzielt, daß aufgrund der geringeren Kontaktfläche die Friktion vermindert wird, also das Drehmoment der Armatur verringert wird.

Schließlich ist vorteilhafterweise vorgesehen, daß die Vertiefungen bzw. Rillen als Fettspeicher dienen, insbesondere im Bereich der Schaltwelle. Entsprechend dem Verformungsgrad bzw. dem Verschleiß der Dichtung kann somit kontinuierlich Fett an die Schaltwelle abgegeben werden.

Weitere vorteilhafte Merkmale der Erfindung ergeben sich aus den übrigen Ansprüchen im Zusammenhang mit der nachfolgenden Beschreibung, in der ein bevorzugtes Ausführungsbeispiel der Erfindung anhand der Zeichnung näher beschrieben wird.

In der Zeichnung zeigen, teilweise in schematisch bzw. halbschematischer Darstellung:
- Fig. 1: eine geschnittene Teilansicht eines Kugelhahns im Bereich der Schaltwellenabdichtung,
- Fig. 2: eine halbschematische vergrößerte Darstellung des Dichtungsbereichs, und
- Fig. 3: eine gegenüber Fig.2 nochmals vergrößerte Teildarstellung.

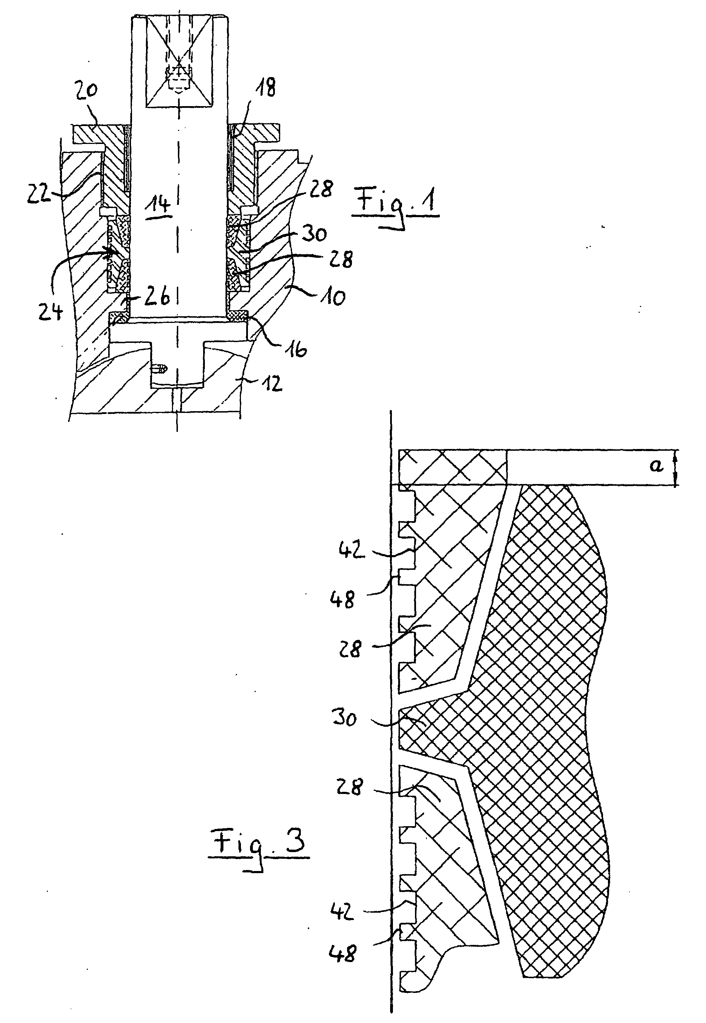

In Figur 1 ist mit der Bezugsziffer 10 ein Kugelhahngehäuse, mit der Bezugsziffer 12 die Kugel des Kugelhahns und mit der Bezugsziffer 14 die Schaltwelle des Kugelhahns bezeichnet, die über ein Schaltwellenlager 16 und eine Führungsbuchse 18 im Gehäuse 10 gelagert ist. Die Führungsbuchse 18 ist ihrerseits in einer Stopfbuchsschraube 20 aufgenommen, die über ein Feingewinde 22 koaxial zur Schaltwelle in das Gehäuse 10 einschraubbar ist und mit ihrer unteren Stirnfläche auf die insgesamt mit der Bezugsziffer 24 bezeichnete Keilringpackung einwirkt, die sich an ihrem gegenüberliegenden Ende an einem sich nach innen bis nahe zur Schaltwelle erstreckenden Gehäuseflansch 26 abstützt.

Die Keilringpackung 24 umfaßt zwei erste, spiegelbildlich symmetrische Keilringe 28 sowie einen zweiten Keilring 30. Die beiden ersten Keilringe 28 liegen mit ihren Innenseiten dichtend an der Schaltwelle 14 an, während der zweite Keilring 30 mit seiner Außenseite dichtend an der zylindrischen Gehäusewandung 32 anliegt.

Die beiden ersten Keilringe 28 bestehen im Falle des beschriebenen Ausführungsbeispiels aus einem geeigneten gleitfähigen PTFE-Kompound , also aus gut gleitfähigem Material, während der zweite Keilring 30 aus reinem fließfähigem PTFE besteht, also aus gut fließfähigem Material.

Die Innenseite des zweiten Keilrings 3o ist dachförmig mit zwei geneigten Keilflächen 34 ausgebildet, wobei jede Keilfläche 34 mit je einer auf der Außenseite eines jeden ersten Keilrings ausgebildeten Keilfläche 36 zusammenwirkt. Im unverschlissenen Zustand der Dichtung stehen die beiden ersten Keilringe 28 in axialer Richtung über den zweiten Keilring 30 vor, wobei der im Laufe des Betriebs auftretende Verschleiß durch Nachziehen der Stopfbuchsschraube 20 ausgeglichen werden kann.

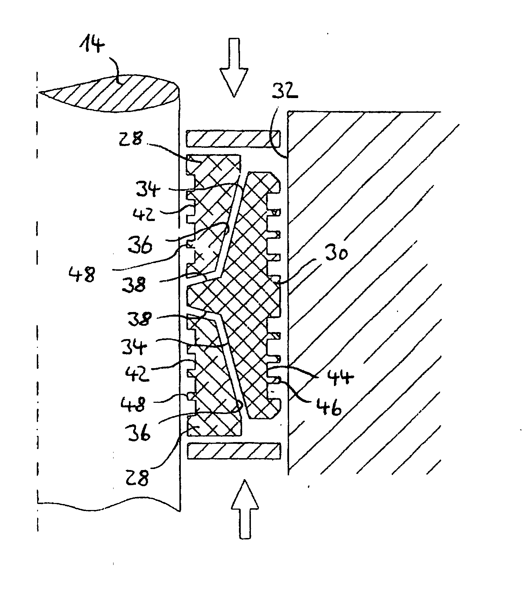

An die einander zugewandten Enden der beiden Keilflächen 34 des zweiten Keilrings 30 schließt sich jeweils eine Umlenkfläche 38 an, die sich bis zur Schaltfläche hin erstreckt und deutlich stärker geneigt ist als die Keilfläche 34. Die beiden ersten Keilringe 28 weisen an ihren den Umlenkflächen zugewandten Enden Endflächen 40 auf, deren Neigung der Neigung der Umlenkflächen entspricht. Wenn durch einsatzbedingten Verschleiß die beiden Keilringe 28 am Ende des Keilrings 30 aufliegen, so kommt es zu einer sog. Notabdichtung. Das Nachstellen der Stopfbuchsschraube 20 bewirkt, daß die aufeinander zu gerichteten Enden der ersten Keilringe 28 auf den Umlenkflächen 38 gegen die Schaltwelle gedrückt werden und sich verformen und so eine zusätzliche Dichtfunktion bewirken. Gleichzeitig wird die statische Dichtung 30 in die Gegenrichtung gedrückt. Die Dichtreserve ist, wie aus den Figuren erkennbar, in der Geometrie der beiden Keilringe 28 integriert und in Figur 3 durch das Maß a veranschaulicht.

An der der Schaltwelle zugewandten Seite sind die ersten Keilringe 28 mit Rillen bzw. Nuten 42 versehen, Ebenso ist die der Gehäusewandung zugewandte Seite des zweiten Keilrings 30 mit Rillen bzw. Nuten 44 versehen. Die verbleibenden Lamellen 46 bzw. 48 ergeben die weiter oben geschilderten Vorteile. Das bei der Montage verwendete Montagefett kann sich in den Rillen zwischen den Lamellen sammeln, wodurch ein Fettspeicher geschaffen wird, der kontinuierlich Fett insbesondere an die Schaltwelle abgibt.

### Bezugszeichenliste:

- 10: Kugelhahngehäuse
- 12: Kugel
- 14: Schaltwelle
- 16: Schaltwellenlager
- 18: Führungsbuchse
- 20: Stopfbuchsschraube
- 22: Feingewinde
- 24: Keilringpackung
- 26: Flansch
- 28: erste Keilringe
- 30: zweiter Keilring
- 32: Gehäusewandung
- 34: Keilflächen
- 36: Keilflächen
- 38: Umlenkflächen
- 40: Endflächen
- 42: Rillen
- 44: Rillen
- 46: Lamellen
- 48: Lamellen

## Patentansprüche

1. Packung (24) für ein Abdichtsystem für die Schaltwelle (14) einer Armatur, insbesondere eines Kugelhahns,
wobei
die Packung (24) einen ersten Bereich (28) umfaßt, der im Wesentlichen an der Schaltwelle (14) anliegt und aus einem ersten Material besteht, die Packung einen zweiten Bereich (30) umfaßt, der im Wesentlichen an der der Schaltwelle gegenüberliegenden Wandung (32) anliegt und aus einem zweiten, vom ersten Material unterschiedlichen Material besteht, das erste Material gleitfähiger ist als das zweite Material, das zweite Material fließfähiger ist als das erste Material, und die Packung (24) mehrstückig als Keilringdichtung mit mindestens zwei Keilringen (28, 30) ausgebildet ist, wobei der mindestens eine, im Wesentlichen an der Schaltwelle (14) anliegende erste Keilring (28) aus dem ersten Material und der mindestens eine, im Wesentlichen an der gegenüberliegenden Wandung (32) anliegende zweite Keilring (30) aus dem zweiten Material besteht,
**dadurch gekennzeichnet, daß** sich an die Keilfläche (34) des zweiten Keilrings (30) an ihrem schaltwellennahen Ende eine Umlenkfläche (38) mit größerer Neigung als diejenige der Keilfläche anschließt, wobei sich die Umlenkfläche bis zur Schaltwelle hin erstreckt.

2. Packung nach Anspruch 1, **dadurch gekennzeichnet, daß** das erste Material ein gleitfähiges PTFE-Kompound und das zweite Material reines fließfähiges PTFE ist.

3. Packung nach Anspruch 1 oder 2, **dadurch gekennzeichnet, daß** es zwei erste Keilringe (28) und einen zweiten Keilring (30) umfaßt, wobei der zweite Keilring (30) zwei entgegengesetzt geneigte Keilflächen (34) aufweist, denen jeweils eine Keilfläche (36) der beiden ersten Keilringe (28) gegenüberliegt.

4. Packung nach einem der vorhergehenden Ansprüche, **dadurch gekennzeichnet, daß** zwischen den beiden entgegengesetzt geneigten Keilflächen (34) des zweiten Keilrings (30) ein sich zur Schaltwelle (14) hin erstreckender , im Querschnitt zahnartiger Vorsprung ausgebildet ist, dessen beide seitliche Flanken.die Umlenkflächen (38) definieren.

5. Packung nach einem der vorhergehenden Ansprüche, **dadurch gekennzeichnet, daß** der mindestens eine erste Keilring (28) an seinem schmalen Ende eine der Neigung der Umlenkfläche (38) entsprechende Endfläche (40) aufweist.

6. Packung nach einem der vorhergehenden Ansprüche, **dadurch gekennzeichnet, daß** der an der Schaltwelle (14) anliegende erste Bereich (28) der Packung (24) und/oder der an der gegenüberliegenden Fläche (32) anliegende zweite Bereich (30) der Packung Vertiefungen (42, 44) aufweist.

7. Packung nach Anspruch 6, **dadurch gekennzeichnet, daß** die Vertiefungen als Rillen (42, 44) ausgebildet sind.

8. Packung nach Anspruch 7, **dadurch gekennzeichnet, daß** die jeweiligen Kontaktflächen mit der Schaltwelle bzw. der Wandung im Wesentlichen lamellenförmig (46, 48) ausgebildet sind.

9. Packung nach einem der Ansprüche 6 bis 8, **dadurch gekennzeichnet, daß** die Vertiefungen (42, 44) als Fettspeicher dienen.

10. Abdichtsystem für die Schaltwelle (14) einer Armatur, insbesondere eines Kugelhahns, mit einer zwischen der Schaltwelle und einer hierzu konzentrischen, der Schaltwelle gegenüberliegenden Wandung (32) angeordneten Packung (24), die mittels einer koaxial zur Schaltwelle verstellbaren Stopfbuchsschraube (20) zum Herstellen der Dichtung zwischen Schaltwelle und Wandung in radialer Richtung deformierbar ist, **dadurch gekennzeichnet, daß** die Packung (24) nach den Merkmalen eines oder mehrerer der Ansprüche 1 bis 9 aus gebildet ist.

11. Kugelhahn mit einem Abdichtsystem nach Anspruch 10.

## Claims

1. Packing (24) for a sealing system for the selector shaft (14) of a fitting, in particular a ball valve, wherein the packing (24) comprises a first area (28) which essentially lies on the selector shaft (14) and consists of a first material, the packing comprises a second area (30) which essentially lies on the wall (32) opposite the selector shaft and consists of a second material different from the first, the first material has greater slidability than the second material and the second material has greater flowability than the first material, and the packing (24) is formed of several pieces as a tapered ring seal with at least two tapered rings (28, 30), wherein the at least one first tapered ring lying essentially on the selector shaft (14) comprises the first material and the at least one second tapered ring lying essentially on the opposite wall (32) comprises the second material, **characterised in that** the tapered surface (34) of the second tapered ring (30) at its end close to the selector shaft has a deflector surface (38) of steeper slope than that of the tapered surface, the deflector surface extending up to the selector shaft.

2. Packing according to claim 1, **characterised in that** the first material is a slidable PTFE compound and the second material a purely flowable PTFE.

3. Packing according to claim 1 or 2, **characterised in that** it comprises two first tapered rings (28) and one second tapered ring (30), the second tapered ring (30) having two tapered surfaces (34) with opposing slopes, opposite each of which surfaces is a tapered surface (36) of the two first tapered rings (28).

4. Packing according to any of the previous claims, **characterised in that** between the two tapered surfaces (34) with opposing slopes of the second tapered ring (30) is formed a projection of tooth-like cross-section extending up to the selector shaft (14), the two side flanks of which projection define the deflection surfaces (38).

5. Packing according to any of the previous claims, **characterised in that** the at least one first tapered ring (28) at its narrow end has an end surface (40) corresponding to the slope of the deflector surface (38).

6. Packing according to any of the previous claims, **characterised in that** the first area (28) of the packing (24) lying on the selector shaft (14) and/or the second area (30) of the packing lying on the opposite surface (32) has recesses (42, 44).

7. Packing according to claim 6, **characterised in that** the recesses are formed as grooves (42,44).

8. Packing according to claim 7, **characterised in that** the respective contact surfaces with the selector shaft or the wall are formed essentially lamellar (46, 48).

9. Packing according to any of claims 6 to 8, **characterised in that** the recesses (42, 44) serve as grease stores.

10. Sealing system for the selector shaft (14) of a fitting, in particular a ball valve, with a packing (24) arranged between the selector shaft and a wall (32) concentric to this and opposite the selector shaft, which packing can be deformed radially by means of a stuffing box screw (20) adjustable co-axial to the selector shaft to create the seal between the selector shaft and the wall, **characterised in that** the packing (24) is designed according to the features of one or more of claims 1 to 9.

11. Ball valve with a sealing system according to claim 10.

## Revendications

1. Garniture (24) destinée à un système d'étanchéité pour la tige de commande (14) d'un robinet-vanne, notamment un robinet à tournant, dans laquelle la garniture (24) comprend une première zone (28), qui est globalement appliquée contre la tige de commande (14), en un premier matériau, la garniture comprend une seconde zone (30), qui est globalement appliquée contre la paroi (32) située en face de la tige de commande, en un second matériau, différent du premier matériau, le premier matériau ayant une aptitude au glissement, qui est supérieure à celle du second matériau, le second matériau ayant une aptitude à l'écoulement plastique, qui est supérieure à celle du premier matériau, et la garniture (24) étant réalisée en plusieurs parties en tant que joint d'étanchéité conique comportant au moins deux anneaux coniques (28, 30), dans lequel au moins un premier anneau conique (28), qui est globalement appliqué contre la tige de commande (14), consiste en ledit premier matériau, et au moins un second anneau conique (30), qui est globalement appliqué contre la paroi (32) opposée, consiste en ledit second matériau,
**caractérisée en ce qu'**une surface déflectrice (38) se raccorde à la surface conique (34) du second anneau conique (30), au niveau de son extrémité proche de la tige de commande, avec une inclinaison supérieure à celle de la surface conique, la surface déflectrice s'étendant jusqu'à la tige de commande.

2. Garniture selon la revendication 1, **caractérisée en ce que** le premier matériau est un composé à base de PTFE ayant une aptitude au glissement, et **en ce que** le second matériau est du PTFE pur ayant une aptitude à l'écoulement plastique.

3. Garniture selon la revendication 1 ou 2, **caractérisée en ce qu'**elle comprend deux premiers anneaux coniques (28) et un second anneau conique (30), le second anneau conique (30) présentant deux surfaces coniques (34) inclinées en sens mutuellement opposé, et en face desquelles est située chaque fois une surface conique (36) des deux premiers anneaux coniques (28).

4. Garniture selon l'une des revendications précédentes, **caractérisée en ce qu'**il est prévu, entre les deux surfaces coniques (34) du second anneau conique (30), qui sont inclinées en sens mutuellement opposé, une partie saillante, à section transversale en forme de dent, qui s'étend jusqu'à la tige de commande (14) et dont les deux flancs latéraux définissent les surfaces déflectrices (38).

5. Garniture selon l'une des revendications précédentes, **caractérisée en ce que** ledit au moins un premier anneau conique (28) présente, au niveau de sa petite extrémité, une surface d'extrémité (40) correspondant à l'inclinaison de la surface déflectrice (38).

6. Garniture selon l'une des revendications précédentes, **caractérisée en ce que** la première zone (28) de la garniture (24), qui est appliquée contre la tige de commande (14), et/ou la seconde zone (30) de la garniture, qui est appliquée contre la surface (32) opposée, présentent des évidements (42, 44).

7. Garniture selon la revendication 6, **caractérisée en ce que** les évidements sont réalisés sous la forme de rainures (42, 44).

8. Garniture selon la revendication 7, **caractérisée en ce que** les surfaces correspondantes de contact avec la tige de commande, respectivement avec la paroi, sont réalisées globalement en forme de lamelles (46, 48).

9. Garniture selon l'une des revendications 6 à 8, **caractérisée en ce que** les évidements (42, 44) servent de réserves de graisse.

10. Système d'étanchéité pour la tige de commande (14) d'un robinet-vanne, notamment un robinet à tournant, comportant une garniture (24) disposée entre la tige de commande et une paroi (32) située de manière concentrique en face de la tige de commande, laquelle garniture pouvant être déformée dans le sens radial au moyen d'une vis presse-étoupe (20) déplaçable de manière coaxiale par rapport à la tige de commande pour créer l'étanchéité entre la tige de commande et la paroi, **caractérisé en ce que** la garniture (24) est réalisée selon les particularités énoncées dans une ou plusieurs des revendications 1 à 9.

11. Robinet à tournant comportant un système d'étanchéité selon la revendication 10.
